Europäisches Patentamt

European Patent Office

Office européen des brevets

(19)

(11) Publication number : **0 371 460 B1**

(12) # EUROPEAN PATENT SPECIFICATION

(45) Date of publication of patent specification : **01.03.95 Bulletin 95/09**

(51) Int. Cl.⁶ : **G02C 7/02**

(21) Application number : **89121937.0**

(22) Date of filing : **28.11.89**

(54) **Ophtalmic lens.**

(30) Priority : **29.11.88 JP 301569/88**
**17.02.89 JP 37560/89**
**10.03.89 JP 58918/89**

(43) Date of publication of application :
**06.06.90 Bulletin 90/23**

(45) Publication of the grant of the patent :
**01.03.95 Bulletin 95/09**

(84) Designated Contracting States :
**DE FR GB**

(56) References cited :
**EP-A- 0 093 699**
**BE-A- 877 990**
**GB-A- 2 034 498**
**US-A- 3 960 442**

(56) References cited :
**PATENT ABSTRACTS OF JAPAN, vol. 10, no. 374 (P-527)[2431], 12th December 1986 & JP-A-61 167 902**
**PATENT ABSTRACTS OF JAPAN, vol. 2, no. 127, 25th October 1978, page 7699 E 78 & JP-A-53 94 947**

(73) Proprietor : **SEIKO EPSON CORPORATION**
**4-1, Nishishinjuku 2-chome**
**Shinjuku-ku Tokyo-to (JP)**

(72) Inventor : **Shinohara, Toshihide c/o Seiko Epson Corporation**
**3-5, Owa 3-chome**
**Suwa-shi Nagano-ken (JP)**

(74) Representative : **Hoffmann, Eckart et al**
**Patentanwalt,**
**Blumbach & Partner,**
**Bahnhofstrasse 103**
**D-82166 Gräfelfing (DE)**

EP 0 371 460 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the shape of a refractive surface of an ophtalmic lens.

Conventionally, a refractive surface (referred to as a front refractive surface hereinafter) on the front convex side of an ophtalmic lens for use in a short-sightedness remedy is spherically shaped in order to facilitate its manufacturing. This lens will be referred to as a spherical lens hereinafter. Generally the refractive power of a lens is indicated by a unit of diopter (referred to as D hereinafter), and a refractive power (a surface refractive power) at the surface of the lens is defined by the curvature $\rho$ (unit: $m^{-1}$) of the surface and the refractive index n of the lens material as shown by the following equation.

$$\text{Surface Refractive Power } = (n - 1) \times \rho$$

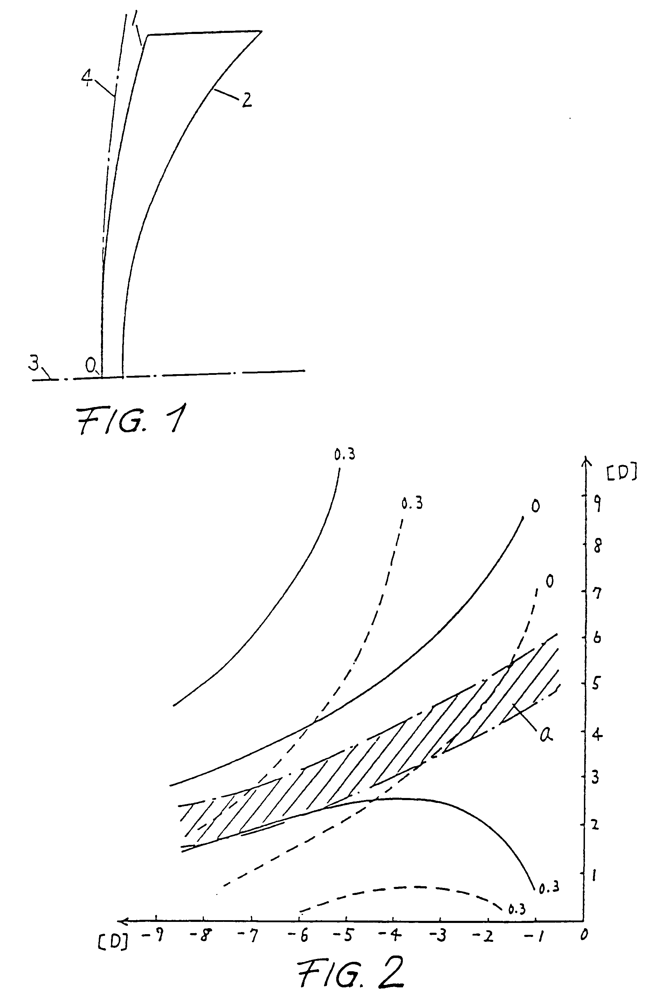

The surface refractive power of the lens front refractive surface is especially called a base curve. A curvature corresponding to the base curve will be called the curvature of the base curve hereinafter. Since the power of the lens is mainly defined by the refractive powers of both the front and back refractive surfaces thereof, the base curve can have various values according to the combination ways thereof. However, in order to reduce an astigmatism, as one of the optical deficiencies of the lens, affecting the sight when a person looks at something through the peripheral portion of the lens remote from the optical axis thereof, the base curve is practically limited within a certain extent corresponding to the power of the lens. Fig. 2 shows an example based on a refractive index of 1.50. The astigmatism is shown in a system of Cartesian coordinates whose ordinate corresponds to the base curve and whose abscissa corresponds to the lens power, for the case that a person looks at something through such a peripheral portion at an angle of 30° relative to the optical axis. The solid lines designate the astigmatism occurring when looking at a distant view, and the figure accompanied with the lines indicates the amount of the astigmatism. The solid lines for the astigmatism of 0.3 D are located on opposite sides of the line for the nonastigmatism (0 D). The broken lines similarly designate the astigmatism occurring when looking at a close view (30 cm). Fig. 2 clearly shows that the most suitable base curves having the astigmatism made zero are different in the distant view and in the close view. Therefore, the base curves within the hatched region designated by a in Fig. 2 are usually adopted so as to have equally good sights at both the distant view and the close view.

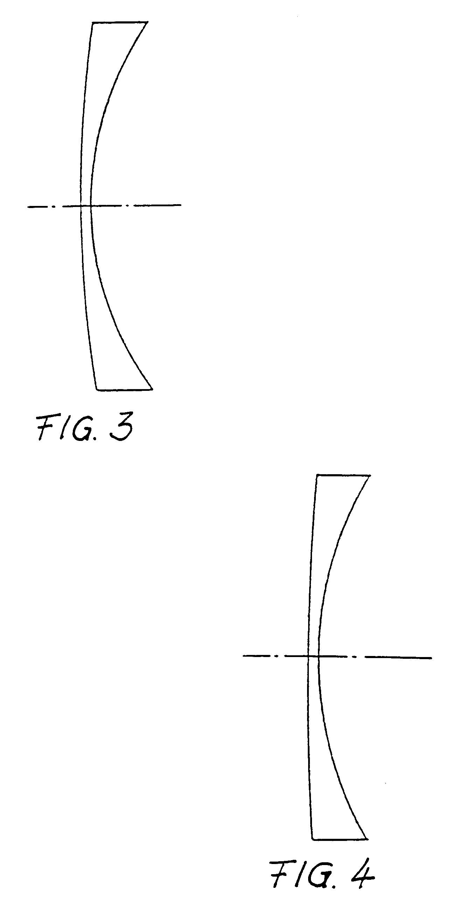

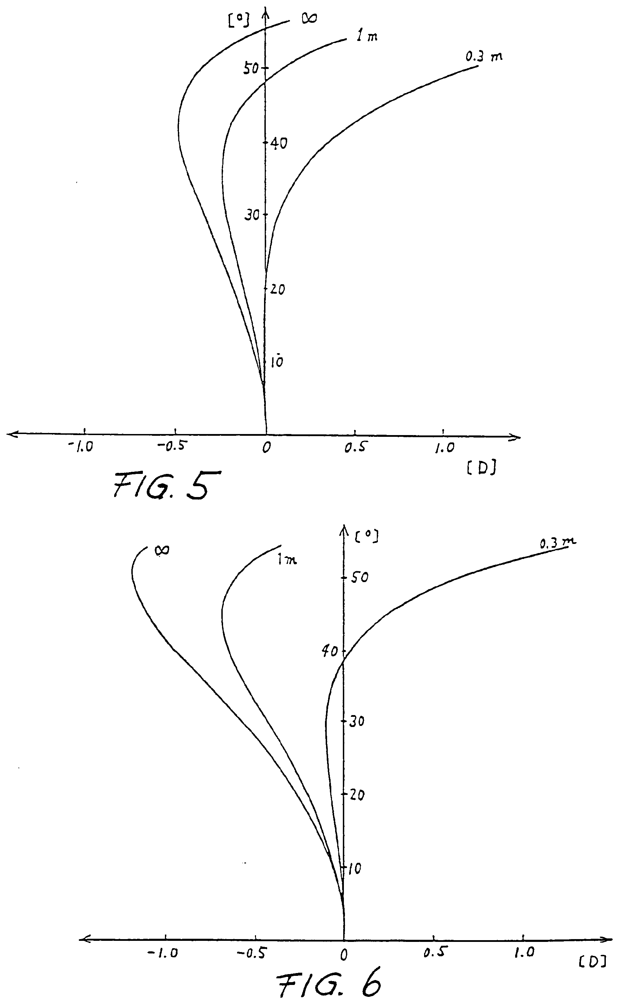

On the other hand, a drawback associated with a lens for a short-sightedness remedy, is that the edge thickness of the lens (the thickness of the lens at its outer periphery) increases as the shortsightedness becomes stronger. Fig. 3 shows one example of such lenses and is a sectional view of a lens having a power of 6 D and a diameter of 75 mm. This lens is an ordinary plastic lens having a refractive index of 1.5, a base curve of 2.0 D and a center thickness of 2 mm. In this case, the edge thickness of the lens becomes 11.7 mm. Therefore, when being used for eyeglasses, it becomes unsightly due to its thick edge. To solve this problem, the base curve could be made small. Fig. 4 shows a lens whose base curve is 1.0 D with the remaining conditions being the same as in case of Fig. 3. The edge thickness of this lens is 11.2 mm, which is thinner by 0.5 mm than the one shown in Fig. 3. However, since the base curve should be determined on account of the optical efficiency as described above, the optical efficiency becomes extremely worse in the case of the 1.0 base curve as shown in Figs. 5 and 6. Figs. 5 and 6 show the astigmatism in the fields of vision under the worn condition of the lenses having base curves of 2.0 D and 1.0 D, respectively. The ordinate of the Cartesian coordinates represents the angle of the field of vision (unit:°) and the abscissa thereof represents the astigmatism (unit: D) based on a reference refractive power in a sagittal direction of a spherical segment. Each of Figs. 5 and 6 shows the astigmatism in the field of vision in case that the sight distance is infinite ($\infty$), 1 m and 0.3 m, respectively.

On the other hand, as a countermeasure for eliminating the drawback with respect to the external appearance of the shortsightedness remedy lens, there have been proposed several methods like that to make either the front refractive surface or/and the back refractive surface aspherical (including such a method as to combine two or more spherical surfaces). There are, however, a few problems associated with such methods, which methods and problems will be explained hereinafter.

A lens having an aspherical front refractive surface is disclosed in JP-A-94947/1978 and US-A-4,279,480. The lens disclosed in JP-A-94947/1978 is provided with a front refractive surface comprising a central portion (the diameter is 40 mm in its embodiment) formed by one spherical surface and an outer peripheral portion formed by a torus surface having a larger curvature than that of the central portion. Since an extremely large difference between the curvature of the central portion and that of the outer peripheral portion is undesirable in order to prevent the optical efficiency of the outer peripheral portion from being lowered by the large spherical surface provided in the central portion, disadvantageously it is impossible to make the lens thinner. The lens disclosed in US-A-4,279,480 has a front refractive surface formed by an aspherical surface which is defined by a special function. In this case, along from the center of rotation to the periphery of the lens the refractive surface of the lens once projects forward and the retreats backward. A problem associated with this lens lies in its peculiar shape. That is, since the front refractive surface causes an extremely uneven reflection due to its undulation, the lens presents an unsightly appearance.

Lenses having an aspherical back refractive surface are disclosed in JP-A-84741/1978, JP-A-84742/1978, JP-A-195826/1983 (IT 48315/82) and JP-A-60724/1985. A problem common to all of those lenses having an aspherical back refractive surface is that they present an unsightly appearance in eyeglasses because their back refractive surface has a convex toric shape or a cylindrical shape in the case of an astigmatic lens. Further, since ophtalmic lenses which are widely used nowadays have a concave toric surface as their back refractive surface, lens manufacturing machines adapted to manufacture that kind of lens must be largely modified in order to manufacture lenses having an aspherical back refractive surface.

As mentioned above, there are several problems associated with those conventional lenses to which an aspherical surface is applied.

The present invention is intended to solve the above-mentioned problems associated with an ophtalmic lens and has for its object to provide an ophtalmic lens which has a superior optical efficiency and a thin shape.

This object is achieved with an ophtalmic lens as claimed.

In order to accomplish the object described above, the present invention provides an ophtalmic lens having a front refractive surface formed in a special aspherical shape as will be explained in detail with reference to the drawings.

The above and other objects and advantages of the present invention will become more apparent from the following description of the invention with reference to the attached drawings.

Fig. 1     is a partial sectional view showing a meridian of an ophtalmic lens according to the present invention and a meridian of a conventional ophtalmic lens;

Fig. 2     is a graph showing the astigmatism depending on the power and the base curve of a conventional spherical lens;

Figs. 3 and 4     are sectional views of conventional spherical lenses;

Figs. 5 and 6     are graphs showing the amount of astigmatism with respect to angles of the field of vision of the conventional spherical lenses shown in Figs. 3 and 4, respectively;

Figs. 7 and 8     are graphs of a first embodiment of the present invention, Fig. 7 showing the change of curvature of the meridian thereof, and Fig. 8 shown the amount of astigmatism with respect to the angle of the field of vision;

Figs. 9 and 10     are graphs of a second embodiment of the present invention, Fig. 9 showing the change of curvature of the meridian thereof, and Fig. 10 showing the amount of astigmatism with respect to the angle of the field of vision;

Figs. 11 and 12     are graphs of a third embodiment of the present invention, Fig. 11 showing the change of curvature of the meridian thereof, and Fig. 12 showing the amount of astigmatism with respect to the angle of the field of vision;

Figs. 13 and 14     are graphs of a fourth embodiment of the present invention, Fig. 13 showing the change of curvature of the meridian thereof, and Fig. 14 showing the amount of astigmatism with respect to the angle of the field of vision;

Figs. 15 and 16     are graphs of a fifth embodiment of the present invention, Fig. 15 showing the change of curvature of the meridian thereof, and Fig. 16 showing the amount of astigmatism with respect to the angle of the field of vision; and

Fig. 17     is a graph showing the change of curvature of the meridian in a sixth embodiment of the present invention.

Fig. 1 is an explanatory view showing schematically the sectional shape of a lens according to the present invention. In Fig. 1, 1 designates a front refractive surface (a meridian) according to the present invention, 2 is a back refractive surface, and 3 an axis of rotational symmetry of the lens. Namely, in the present invention, the front refractive surface is formed by rotating the meridian 1 formed as a noncircular arc about the axis of symmetry 3. 4 designates a circular arc shaped meridian of a spherical front refractive surface, described by a radius of curvature (the inverse number of the curvature) about a center of rotation 0 thereof. Namely, 4 is the spherical front refractive surface of the conventional ophtalmic lens.

<First Embodiment>

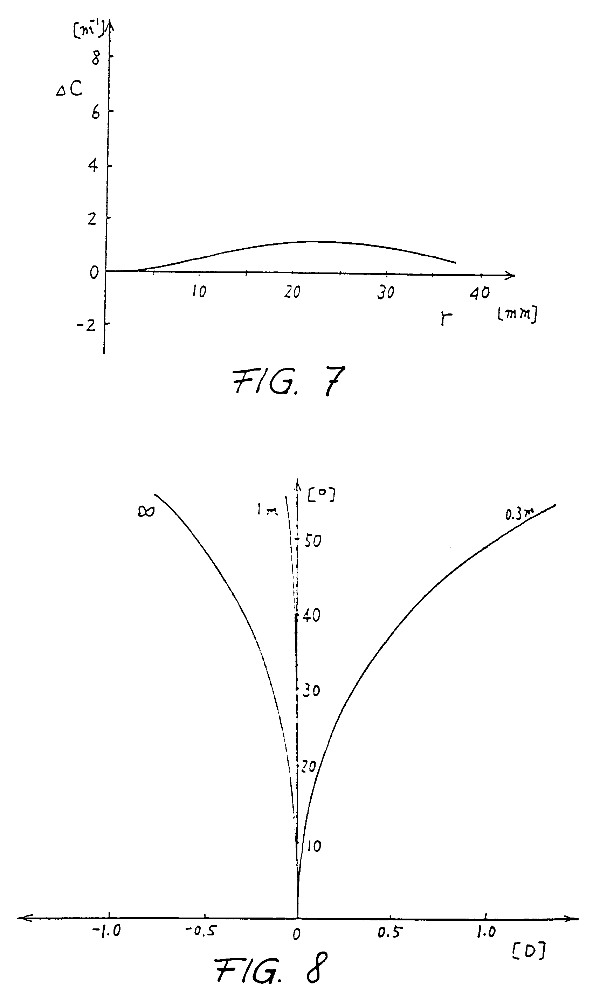

Figs. 7 and 8 show graphs corresponding to a first embodiment of the present invention, which is attained by applying the present invention to the above-mentioned conventional embodiment having a power of -6 D and a base curve of 1.0 D.

Fig. 7 shows the change of curvature at the meridian of the front refractive surface of the ophtalmic lens. In Fig. 7, the horizontal axis indicates the distance from the axis of symmetry, and the vertical axis indicates a change amount of the curvature with respect to the curvature of the base curve. Concrete change amounts $\Delta C$ of the curvature are shown in Table 1. As shown in Fig. 7, as the distance from the axis of symmetry becomes longer, the curvature at the meridian increases gradually with intensifying the degree of increase up to a distance of 10 mm and then reducing the degree of increase between 10 mm and 15 mm. The increase of the curvature becomes zero between 20 mm and 25 mm, and on the contrary the curvature turns to decrease beyond 25 mm. When representing the curvature mathematically by means of the function C(r) relative to the distance r from the axis of symmetry, its linear differential coefficient dC/dr increases gradually from zero at the axis of symmetry, reaches a peak between 10 mm and 15 mm and then decreases as getting remoter therefrom. By changing the curvature in that way the front refractive surface is shaped so as to approach the back refractive surface side with an increasing distance from the axis of symmetry as compared to a circular arc of the base curve shown in Fig. 1. Therefore, it becomes possible to make the edge of the lens thinner. In this embodiment, the edge thickness becomes 10.8 mm, which is 0.4 mm less than the 11.2 mm edge thickness of the spherical lens. Accordingly, the edge thickness can be reduced by 0.9 mm in comparison with a spherical lens having the ordinary base curve (2.0 D).

Fig. 8 shows the astigmatism of the lens according to this embodiment in the same way as Figs. 5 and 6 do for conventional lenses. When it is compared with the conventional lens whose astigmatism is badly increased when the base curve is lower than the ordinary one as shown in Fig. 6, it is found that the astigmatism is remarkably decreased by making the lens aspherical in spite of the same low base curve.

## Table 1

| r (mm) | $\Delta C$ (m$^{-1}$) |
|---|---|
| 0.0 | 0.00 |
| 2.5 | 0.04 |
| 5.0 | 0.17 |
| 7.5 | 0.36 |
| 10.0 | 0.58 |
| 12.5 | 0.78 |
| 15.0 | 0.98 |
| 17.5 | 1.12 |
| 20.0 | 1.20 |
| 22.5 | 1.24 |
| 25.0 | 1.22 |
| 27.5 | 1.15 |
| 30.0 | 1.04 |
| 32.5 | 0.89 |
| 35.0 | 0.69 |
| 37.5 | 0.47 |

4

<Second Embodiment>

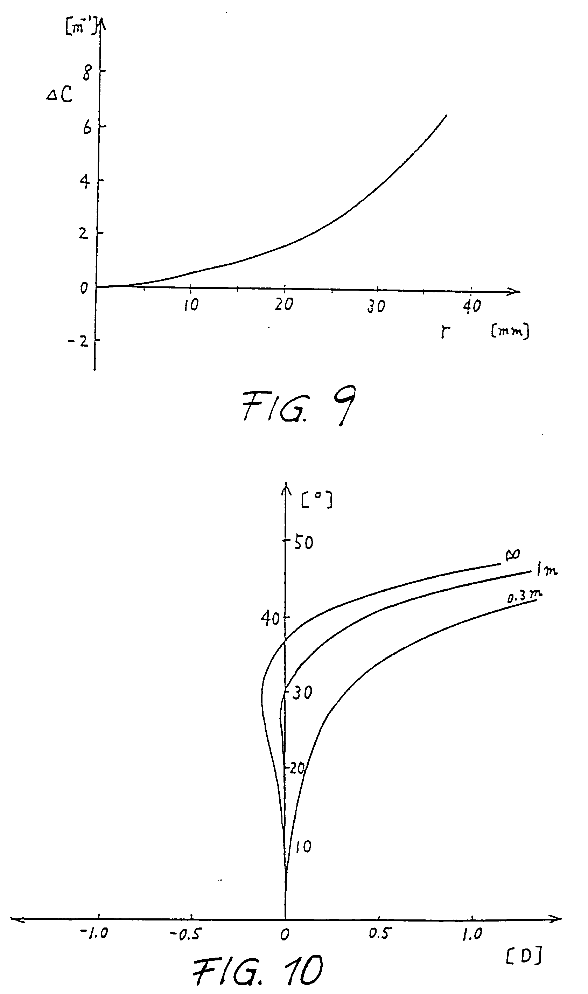

Figs. 9 and 10 show graphs corresponding to a second embodiment of the present invention, which is attained by applying the present invention to a lens having a power of -6 D and a base curve of 1.0 D similarly as the first embodiment. Fig. 9 shows the change of curvature of the front refractive surface. Concrete change amounts of the curvature are shown in Table 2. As will be understood by comparison with Fig. 7 and Table 1, this second embodiment is completely the same as the first embodiment up to a distance of 15 mm from the axis of symmetry. However, from this point on the curvature of the second embodiment increases abruptly up to the outer periphery. Since the meridian shifts farther toward the back refractive surface side in the outer periphery of the lens than that in the first embodiment, the edge becomes thinner than that of the first embodiment. In this embodiment, the edge thickness becomes 10.5 mm, which is thinner by 0.3 mm than that of the first embodiment. Fig. 10 shows the astigmatism of this embodiment, namely shows the same state as is shown in Fig. 10 for the first embodiment as far as the field of vision of 30° corresponding to the distance of 15 mm on the lens, and an abruptly increased astigmatism beyond 30°. This embodiment is designed to improve the optical efficiency within such an extent where a superior optical efficiency is required because of predominant use during the ordinary use, namely within the extent of 15 mm from the axis of symmetry of the lens. Therefore the curvature change gradually increases within the said extent in the same way as with the first embodiment while the edge becomes thinner by more abruptly increasing the curvature outside of the said extent.

## Table 2

| r (mm) | $\Delta C$ (m$^{-1}$) |
|--------|---------|
| 0.0 | 0.00 |
| 2.5 | 0.04 |
| 5.0 | 0.17 |
| 7.5 | 0.36 |
| 10.0 | 0.58 |
| 12.5 | 0.78 |
| 15.0 | 0.98 |
| 17.5 | 1.30 |
| 20.0 | 1.61 |
| 22.5 | 1.99 |
| 25.0 | 2.50 |
| 27.5 | 3.08 |
| 30.0 | 3.83 |
| 32.5 | 4.62 |
| 35.0 | 5.50 |
| 37.5 | 6.54 |

<Third Embodiment>

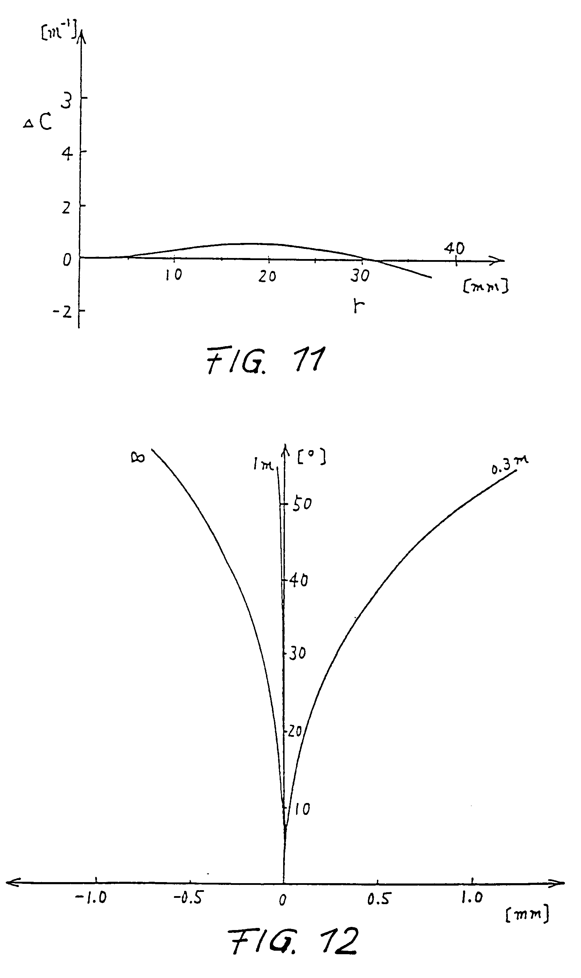

Figs. 11 and 12 show graphs corresponding to a third embodiment of the present invention, which is attained by applying the present invention to the above mentioned lens having a power of -6 D and a base curve of 2.0 D.

Table 3

| $r$ (mm) | $\Delta C$ $(m^{-1})$ |
|---|---|
| 0.0 | 0.00 |
| 2.5 | 0.02 |
| 5.0 | 0.10 |
| 7.5 | 0.21 |
| 10.0 | 0.35 |
| 12.5 | 0.46 |
| 15.0 | 0.54 |
| 17.5 | 0.58 |
| 20.0 | 0.59 |
| 22.5 | 0.52 |
| 25.0 | 0.40 |
| 27.5 | 0.26 |
| 30.0 | 0.05 |
| 32.5 | −0.17 |
| 35.0 | −0.40 |
| 37.5 | −0.67 |

In this embodiment, as being understood from Fig. 11 and Table 3, the curvature once increases and then decreases so as to become smaller than the curvature of the base curve at the portion adjacent to the periphery of the lens. Though the edge thickness becomes 11.5 mm which is thinner only by 0.2 mm than that of the spherical lens, the optical efficiency is improved as shown in Fig. 12.

<Fourth Embodiment>

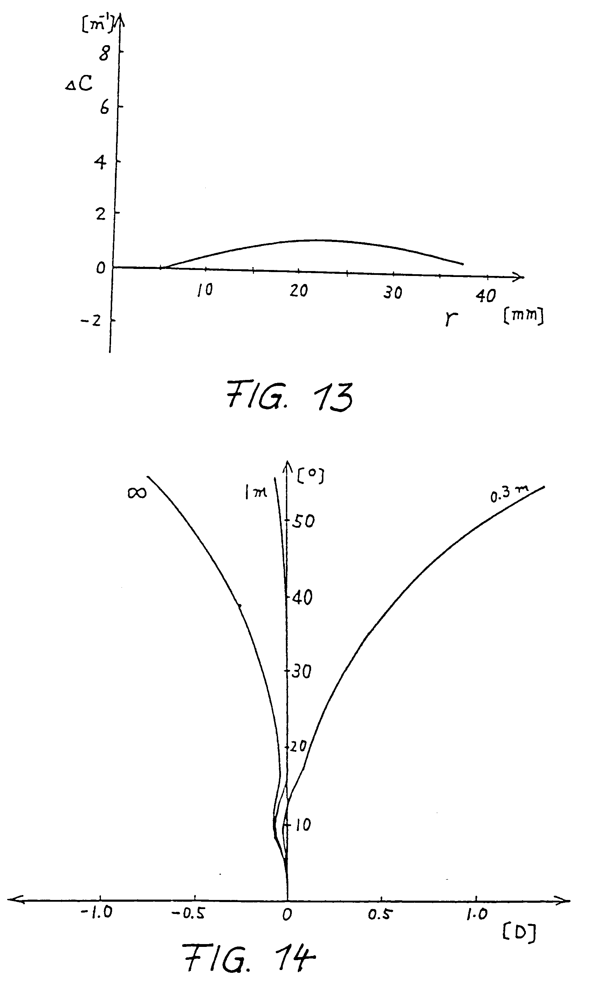

Figs. 13 and 14 show graphs corresponding to a fourth embodiment of the present invention, which is attained by providing a spherical portion having a radius of 5 mm at the central portion in the above first embodiment. In this embodiment, as being understood from Fig. 13 and Table 4, the curvature is constant up to a distance of 5 mm from the axis of symmetry and then changes so as to once increase and then decrease toward the periphery similarly to the first embodiment. In this case, though the astigmatism increases in the central spherical portion due to the decrease of the base curve as shown in Fig. 14, it is improved outside thereof by making the outer periphery aspherical similarly to the first embodiment. The increase of the astigmatism in the central portion does not unduly affect the sight during use of the lens by adjusting the base curve and the size of the central spherical portion so that the increase of the astigmatism is kept within a range of 0.1 D ~ 0.15 D. Even though the edge thickness is reduced only a little in comparison with the first embodiment, the edge thickness is advantageously decreased to become 10.9 mm in comparison with the conventional lens.

The lens according to this embodiment can have the following merits in comparison with the above-mentioned embodiments.

Firstly, stable measurement results can be obtained when the power of the lens is measured. That is, since the lenses according to the above-mentioned embodiments are aspherical throughout their surfaces without any spherical region at the central portion, the measurement of the power of the lens by means of a lens meter at the optical axis (usually coincident with the axis of symmetry) is badly affected by only a little deviation of the measuring position so as to present erroneous results such as a shifting of the power and an accompaniment with astigmatism due to the affection of the asphericity. But those problems can be solved by the provision of the sphericity at the central portion. (When comparing Fig. 14 with Fig. 8, they seem to be inverted. However, since both Figs. 8 and 14 show the astigmatisms along from the center to the outer periphery under the worn condition of the lenses and the light passing angles differ in those cases at the time of measurement of the power by means of the lens meter, they present the inverted results respectively as mentioned above. In other words, the astigmatism of the lens under the worn condition is different from that of lenses which is measured with the lens meter. With respect to the embodiment of Figs. 14 and 8, the astigmatism near the center position in Fig. 8 is superior to that of Fig. 14. If only this point is watched, the astigmatism of Fig. 8 may appear to be superior to that of Fig. 14. However, the inferior degree of the astigmatism of Fig. 14 is so small to be neclected and, in fact, the astigmatism of Fig. 14 is superior to that of Fig. 8 in view of measuring lenses with a lens meter for manufacturing them.)

## Table 4

| r (mm) | ΔC (m⁻¹) |
|--------|----------|
| 0.0 | 0.00 |
| 2.5 | 0.00 |
| 5.0 | 0.00 |
| 7.5 | 0.36 |
| 10.0 | 0.58 |
| 12.5 | 0.78 |
| 15.0 | 0.98 |
| 17.5 | 1.12 |
| 20.0 | 1.20 |
| 22.5 | 1.24 |
| 25.0 | 1.22 |
| 27.5 | 1.15 |
| 30.0 | 1.04 |
| 32.5 | 0.89 |
| 35.0 | 0.69 |
| 37.5 | 0.47 |

Further, it is possible to meet a request for an eccentricity similarly to the ordinary lens whose front refractive surface is spherical. That is, since stable measurement results of the power can be obtained in the central spherical portion in comparison with a lens having all portions of its refractive surface aspherical as mentioned above, a specified power can be readily attained differently from an entirely aspherical lens even though an eccentric grinding is carried out within the spherical range.

In order to obtain the above-mentioned merits, it is necessary to provide the central spherical portion with a radius of at least 3 mm, preferably not less than 5 mm. It is the reason why the aperture of the measuring portion of the ordinary lens meter is 5 mm ∼ 10 mm.

<Fifth Embodiment>

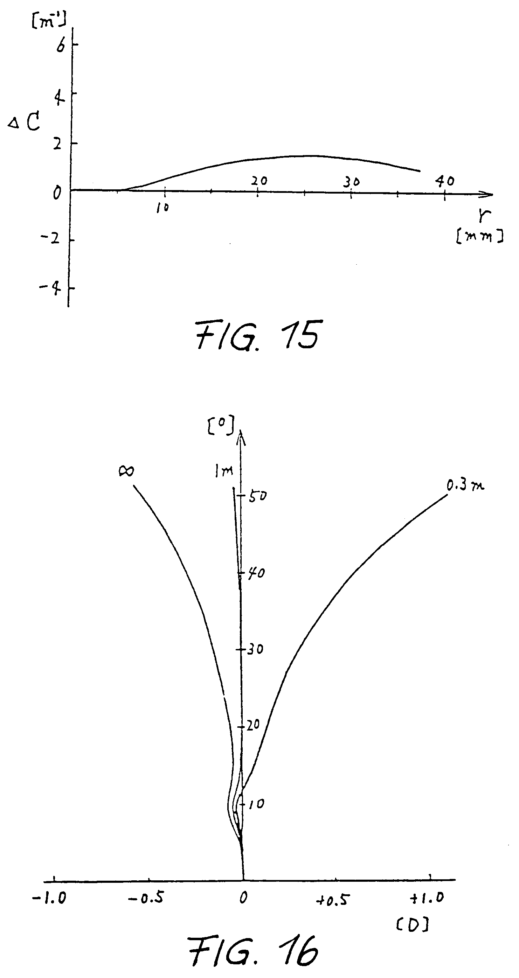

Figs. 15 and 16 show graphs corresponding to a fifth embodiment of the present invention, which is a lens having the same power of -6 D, the same diameter and the same central thickness as those in the above-mentioned embodiments. But the lens is made of a material having a refractive index of 1.60 and an Abbe's number of 35, and its base curve is 1.0 D.

Fig. 15 shows the change of curvature at the meridian of the front refractive surface. The horizontal axis indicates the distance from the axis of symmetry and the vertical axis indicates the change amount of curvature with respect to the curvature of the base curve. Concrete change amounts ΔC of the curvature are shown in Table 5. The lens according to this embodiment has a central spherical portion similarly to the above-mentioned third embodiment. As shown in Fig. 15, as the distance from the axis of symmetry becomes longer, the curvature of the meridian is constant up to 5 mm from the axis of symmetry and then increases gradually with intensifying the degree of increase between 5 mm and 10 mm and then reducing the degree of increase between 10 mm and 15 mm. The increase of the curvature becomes zero at the distance of about 25 mm, and the curvature turns to decrease. When representing the curvature mathematically by the function C(r) relative to the distance r from the axis of symmetry, its linear differential coefficient dC/dr is zero as far as 5 mm from the axis of symmetry, then increases gradually from there, reaches a peak between 10 mm and 15 mm and then decreases with a further increase of r. In this embodiment, the edge thickness of the lens is 9.0 mm, which is thinner by 2.7 mm (23%) or by 2.2 mm (20%), respectively, with respect to the edge thickness of 11.7 mm or 11.2 mm of the above-mentioned conventional spherical lens whose refractive index is 1.50. Further as to the effect attained by enhancing the refractive index of the lens material in comparison with that of the fourth embodiment having a similar change of curvature, advantageously the edge thickness is reduced from 10.9 mm to 9.0 mm by 1.9 mm (17.4%).

Fig. 16 shows the astigmatism of the lens according to this embodiment. In opposition to the conventional spherical design having its astigmatism remarkably increased by lowering its base curve as shown in Fig. 6, the astigmatism of the lens according to this embodiment is remarkably improved by the aspherical design having the change of curvature as mentioned above in spite of the similar base curve.

## Table 5

| r (mm) | $\Delta C$ (m$^{-1}$) |
|---|---|
| 0.0 | 0.00 |
| 2.5 | 0.00 |
| 5.0 | 0.00 |
| 7.5 | 0.25 |
| 10.0 | 0.52 |
| 12.5 | 0.82 |
| 15.0 | 1.06 |
| 17.5 | 1.26 |
| 20.0 | 1.41 |
| 22.5 | 1.51 |
| 25.0 | 1.55 |
| 27.5 | 1.54 |
| 30.0 | 1.47 |
| 32.5 | 1.39 |
| 35.0 | 1.20 |
| 37.5 | 0.99 |

Incidentally, it is to be noted that the lenses of the above-mentioned embodiments are designed to make the astigmatism nearly zero when looking at an object at a distance of 1 m (designed to suit to an intermediate sight) and that design is accomplished. (However, the second embodiment accomplishes the improvement of the astigmatism limited within a 30° angle of the field of vision.) Besides, it is possible to design the ophtalmic lens so as to make the astigmatism zero when looking at a distant object (design for suiting to a distant sight) and to design it so as to make the astigmatism zero when looking at a near object at the distance of about 30 mm (design for suiting to a near sight). In either case, the basic change of curvature is the same as that of this embodiment. But, the change amount of curvature of the lens suited to the distant sight becomes larger than that of this embodiment, and the change amount of curvature of the lens suited to the near sight becomes smaller than that of this embodiment. Thereupon, the edge thickness of the lens suited to the distant sight becomes thinner than that of this embodiment, and the edge thickness of the lens suited to the near sight becomes thicker than that of this embodiment (but thinner than that of the spherical lens). Studies about the sight distance at which the astigmatism is especially to be reduced, revealed that the peripheral portion of the lens becomes short of a remedy power thereof when the lens is suited to the distant sight, has a remedy power nearly similar to or a little insufficient with respect to that at the central portion when it is suited to the intermediate sight, and has a little excessive remedy power when it is suited to the near sight. Therefore, the design distance may be decided so as to be balanced with the above-mentioned thinning of the edge thickness according to the use purpose of the lens. It is preferable for usual use to suit the ophtalmic lenses to the intermediate sight at the distance of about 1 m.

In a shortsightedness remedy ophtalmic lens according to the present invention, the thinning of an edge thickness and the improvement of the optical efficiency can be accomplished simultaneously. Especially, it is effective for both the thinning of the edge thickness of the lens and the improvement of the optical efficiency thereof to gradually increase the curvature of the meridian as far as 15 mm from the axis of symmetry. Further, it is effective for the improvement of the optical efficiency to once increase the linear differential coefficient of the function of the curvature C(r) and then decrease it. Furthermore, by combining the above-mentioned change of curvature with a base curve (the curve value near the axis of symmetry in the present invention) which cannot be used on account of the optical efficiency for the ordinary spherical lens, for example such a low base curve as to meet the following condition, can be attained an ophtalmic lens which has a superior optical efficiency and a remarkably reduced edge thickness. For example, in relation to an equivalent sphericity degree S of the lens:

a) in case that $-6 \leqq S \leqq -2$
$(n - 1) \times \rho_0 \leqq 0.5 \times (S + 6) + 1.5$
b) in case that $S < -6$
$(n - 1) \times \rho_0 \leqq 1.5$

where n is the refractive index of a lens material, and $\rho_0$ is the curvature near the axis of symmetry, namely the curvature of the base curve.

As disclosed in the embodiments of the present invention, in the case of combination with a lens material of a high refractive index (a refractive index of more than 1.55 is called a high refractive index or a middle refractive index in comparison with an ordinary refractive index of 1.50 in a plastic ophtalmic lens), advantageously the lens can be made remarkably thin .

Generally, in a lens material having a high refractive index, the Abbe's number is small (in the case of a plastic material, the Abbe's number becomes not more than 40 in the case of a refractive index not less than 1.55) and disadvantageously a chromatic aberration occurs such that a spectrum (color components of light) is observed along a contour of an object due to a prism effect, when looking at an object through the peripheral portion of the lens. However, by applying an asphericity design according to the present invention to the lens, it becomes possible to improve such a chromatic aberration because the wedged portion formed by the front and back refractive surfaces at the peripheral portion of the lens is reduced in comparison with the conventional spherical lens, namely the prism effect is reduced as shown in Fig. 1.

In the case of making the change of curvature zero as far as 5 mm from the axis of symmetry, namely providing a 10 mm spherical portion in the central portion of the lens, the power of the lens can be stably measured without being affected by asphericity even though a dispersion of the location of the optical axis within a range of $1 \sim 2$ mm occurs, which deviation might be caused during the grinding, at the time of measurement of the power by a lens meter at the optical axis (usually coincident with the axis of rotation). Accordingly, it is possible to meet such a special request as to provide an eccentricity if it is within $2 \sim 3$ mm (to intentionally deviate the optical axis like that).

Further according to the present invention, it is possible to solve problems related to the external appearance and the manufacturing of the conventional shortsightedness remedy aspherical lens and to provide an ophtalmic lens for a shortsightedness remedy which has both a sufficiently thinned edge and a superior optical efficiency.

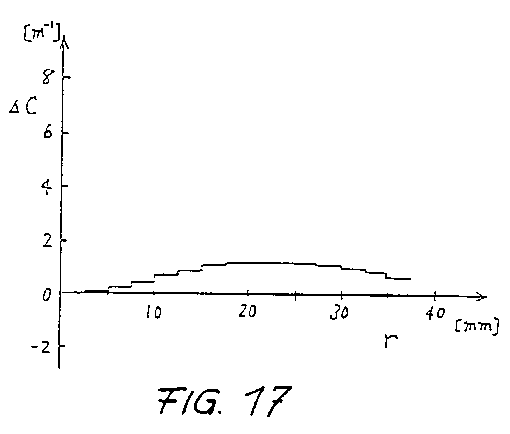

Incidentally, instead of having the curvature of the front refractive surface continuously changing as disclosed in the embodiments of the present invention, there may be a minute step-by-step change as shown in Fig. 17 or a change substantially as shown in the embodiments of the present invention, however with one or more minute steps included.

Further, it is not essential to have the lens symmetric around an axis of rotation. Namely, even if the refractive surfaces are different from each other according to the directions, if the feature of the refractive surfaces mentioned above is obtained, the same effects can be obtained. Furthermore, if the specific feature of the front refractive surface of the present invention is used in the back refractive surface of the lens having plus power, it is possible to provide a thin lens (that is, to get the center portion thinner).

## Claims

1. An ophtalmic lens including a pair of front and back refractive surfaces of which at least one is an aspheric surface wherein the curvature of a meridian in the center of the surface is smaller than at an outside portion, characterized in that from the center of said one refractive surface the curvature of a meridian substantially increases up to at least 15 mm from the center into all directions toward the outer periphery of the lens, and when the curvature of said meridian is represented by C(r) as a function of the distance r from said center the linear differential coefficient dC/dr of said function C increases at least once and then decreases as getting remoter from said center.

2. The lens as defined in claim 1, wherein said refractive surfaces have a rotational symmetry around said center.

3. The lens as defined in claim 1 or 2, wherein said one refractive surface is a front refractive surface.

4. The lens as defined in claims 2 and 3, wherein the curvature of said meridian increases monotonically within the extent of at least 15 mm from an axis of symmetry in the direction remote from said axis of symmetry.

5. The lens as defined in any of claims 3 or 4, wherein in the case that the curvature value near said axis of symmetry in said front refractive surface is designated by $\rho_0$ [m$^{-1}$], an equivalent spherical power of the lens is designated by S [diopter] and the refractive index of the lens material is designated by n, the following conditions are met:
   a) in case that $-6 \leqq S \leqq -2$
   $(n - 1) \times \rho_0 \leqq 0.5 \times (S + 6) + 1.5$
   b) in case that $S < -6$
   $(n - 1) \times \rho_0 \leqq 1.5$

6. The lens as defined in any of claims 3, 4 or 5, wherein the curvature of said meridian of said front refractive surface is constant within the extent at least not less than 3 mm, preferably not less than 5 mm in the direction of the outer periphery from said axis of symmetry and then increases.

7. The lens as defined in any of claims 3, 4, 5 or 6, wherein the refractive index of said lens material is not less than 1.55, and the Abbe's number is not more than 40.

## Patentansprüche

1. Brillenlinse mit einer vorderen und einer hinteren brechenden Fläche, von denen wenigstens eine eine asphärische Fläche ist, wobei die Krümmung eines Meridians in der Mitte der Fläche kleiner als im Außenbereich ist, dadurch gekennzeichnet, daß die Krümmung eines Meridians sich von der Mitte der besagten einen brechenden Fläche bis zu wenigstens 15 mm von der Mitte in allen Richtungen zum Außenumfang der Linse hin wesentlich vergrößert und bei Darstellung der Krümmung des Meridians durch C(r) als Funktion der Entfernung r von der Mitte der lineare Differentialkoeffizient dC/dr der Funktion C sich wenigstens einmal vergrößert und dann verringert mit wachsender Entfernung von der Mitte.

2. Linse nach Anspruch 1, bei der die brechenden Flächen eine Rotationssymmetrie um die Mitte aufweisen.

**3.** Linse nach Anspruch 1 oder 2, bei der die besagte eine brechende Fläche eine vordere brechende Fläche ist.

**4.** Linse nach Anspruch 2 und 3, bei der die Krümmung des Meridians sich innerhalb des Bereichs von wenigstens 15 mm von der Symmetrieachse mit wachsender Entfernung von der Symmetrieachse monoton vergrößert.

**5.** Linse nach Anspruch 3 oder 4, bei der die folgenden Bedingungen erfüllt sind:
   a) $(n - 1) \times \rho_0 \leqq 0,5 \times (S + 6) + 1,5$ für $-6 \leqq S \leqq -2$
   b) $(n - 1) \times \rho_0 \leqq 1,5$ für $S < -6$
   mit $\rho_0$ = Krümmung der vorderen brechenden Fläche in der Nähe der Symmetrieachse in $m^{-1}$, S = äquivalente sphärische Kraft der Linse in Dioptrien und n = Brechungszahl des Linsenmaterials.

**6.** Linse nach Anspruch 3, 4 oder 5, bei der die Krümmung des Meridians der vorderen brechenden Fläche innerhalb eines Bereichs von mindestens nicht weniger als 3 mm, vorzugsweise nicht weniger als 5 mm, von der Symmetrieachse zum Außenumfang hin konstant ist und sich dann vergrößert.

**7.** Linse nach Anspruch 3, 4, 5 oder 6, bei der die Brechungszahl des Linsenmaterials nicht kleiner als 1,55 und die Abbe'sche Zahl nicht größer als 40 ist.

## Revendications

**1.** Une lentille ophtalmique comprenant une paire de surfaces réfringentes avant et arrière parmi lesquelles l'une au moins est une surface asphérique dans laquelle la courbure d'un méridien au centre de la surface est plus faible que dans une partie extérieure, caractérisée en ce qu'à partir du centre de la surface réfringente précitée, la courbure d'un méridien augmente notablement jusqu'à au moins 15 mm à partir du centre, dans toutes les directions, vers la périphérie extérieure de la lentille, et lorsque la courbure de ce méridien est représentée par C(r) en fonction de la distance r à partir du centre, le coefficient différentiel linéaire dC/dr de cette fonction C augmente au moins initialement et diminue ensuite lorsqu'on s'éloigne davantage du centre.

**2.** La lentille définie dans la revendication 1, dans laquelle les surfaces réfringentes ont une symétrie de révolution autour du centre.

**3.** La lentille définie dans la revendication 1 ou 2, dans laquelle la surface réfringente précitée est une surface réfringente avant.

**4.** La lentille définie dans les revendications 2 et 3, dans laquelle la courbure du méridien augmente de façon monotone sur une étendue d'au moins 15 mm à partir d'un axe de symétrie, dans la direction s'éloignant de cet axe de symétrie.

**5.** La lentille définie dans l'une quelconque des revendications 3 ou 4, dans laquelle dans le cas où la valeur de courbure au voisinage de l'axe de symétrie dans la surface réfringente avant est désignée par $\rho_o$ $[m^{-1}]$, une vergence sphérique équivalente de la lentille est désignée par S [dioptries] et l'indice de réfraction du matériau de la lentille est désigné par n, les conditions suivantes sont satisfaites :
   a) dans le cas où $-6 \leqq S \leqq -2$
   $(n - 1) \times \rho_o \leqq 0,5 \times (S + 6) + 1,5$
   b) dans le cas où $S < -6$
   $(n - 1) \times \rho_o \leqq 1,5$

**6.** La lentille définie dans l'une quelconque des revendications 3, 4 ou 5, dans laquelle la courbure du méridien de la surface réfringente avant est constante sur une plage d'au moins 3 mm, et de préférence d'au moins 5 mm dans la direction de la périphérie extérieure, à partir de l'axe de symétrie, et elle augmente ensuite.

**7.** La lentille définie dans l'une quelconque des revendications 3, 4, 5 ou 6, dans laquelle l'indice de réfraction du matériau de là lentille n'est pas inférieur à 1,55, et le nombre d'Abbe n'est pas supérieur à 40.

FIG. 1

FIG. 2

FIG. 3

FIG. 4

FIG. 5

FIG. 6

15

FIG. 7

FIG. 8

FIG. 9

FIG. 10

FIG. 11

FIG. 12

FIG. 13

FIG. 14

FIG. 15

FIG. 16

20

FIG. 17